# FASCICULE DE BREVET EUROPEEN

(11) **EP 2 324 377 B1**
(45) Date de publication et mention de la délivrance du brevet: **05.06.2013**
(21) Numéro de dépôt: 09782803.2
(22) Date de dépôt: 09.09.2009
(51) Int. Cl.: G02B 5/18, G02B 5/20

(54) **FILTRE SPECTRAL NANOSTRUCTURÉ, CAPTEUR D'IMAGES ET PROCÉDÉ DE RÉALISATION**
NANOSTRUKTURIERTES SPEKTRALFILTER, BILDSENSOR UND HERSTELLUNGSVERFAHREN
NANOSTRUCTURED SPECTRAL FILTER, IMAGE SENSOR AND MANUFACTURING METHOD

(30) Priorité: 11.09.2008 FR 0856103
(43) Date de publication de la demande: 25.05.2011
(73) Titulaire: Commissariat à l'Énergie Atomique et aux Énergies Alternatives, 75015 Paris (FR)
(72) Inventeur: MARY, Alexandre, F-38360 Sassenage (FR); DESIERES, Yohan, F-38000 Grenoble (FR)
(74) Mandataire: Ilgart, Jean-Christophe
(86) Numéro de dépôt international: PCT/EP2009/061673
(87) Numéro de publication internationale: WO 2010/029097

(56) Documents cités:
- WO-A-2006/010133
- WO-A-2007/118895
- US-A1- 2003 103 150
- US-A1- 2006 273 245
- US-B1- 7 166 797
- DEGIRON A ET AL: "Optical transmission properties of a single subwavelength aperture in a real metal" OPTICS COMMUNICATIONS, NORTH-HOLLAND PUBLISHING CO. AMSTERDAM, NL, vol. 239, no. 1-3, 1 septembre 2004 (2004-09-01), pages 61-66, XP004527430 ISSN: 0030-4018
- VAN NIEUWSTADT J A H ET AL: "Strong modification of the nonlinear optical response of metallic subwavelength hole arrays" Physical Review Letters APS USA, vol. 97, no. 14, 6 octobre 2006 (2006-10-06), pages 146102/1-4, XP002530460 ISSN: 0031-9007
- BARNESW L ET AL: "Surface plasmon subwavelength optics" NATURE, NATURE PUBLISHING GROUP, LONDON, UK, vol. 424, 14 août 2003 (2003-08-14), pages 824-830, XP007901985 ISSN: 0028-0836
- DEGIRON A ET AL: "The role of localized surface plasmon modes in the enhanced transmission of periodic subwavelength apertures; The role of localized surface plasmon modes in the enhanced transmission of periodic subwavelength apertures" JOURNAL OF OPTICS. A, PURE AND APPLIED OPTICS, INSTITUTE OF PHYSICS PUBLISHING, BRISTOL, GB, vol. 7, no. 2, 1 février 2005 (2005-02-01), pages S90-S96, XP020093050 ISSN: 1464-4258

## Description

### DOMAINE TECHNIQUE

L'invention concerne un filtre spectral, une matrice de filtres spectraux et un capteur d'images comportant une telle matrice de filtres, pouvant fonctionner dans le domaine du visible ou dans d'autres gammes de longueurs d'ondes, par exemple dans le domaine des infrarouges.

### ÉTAT DE LA TECHNIQUE ANTÉRIEURE

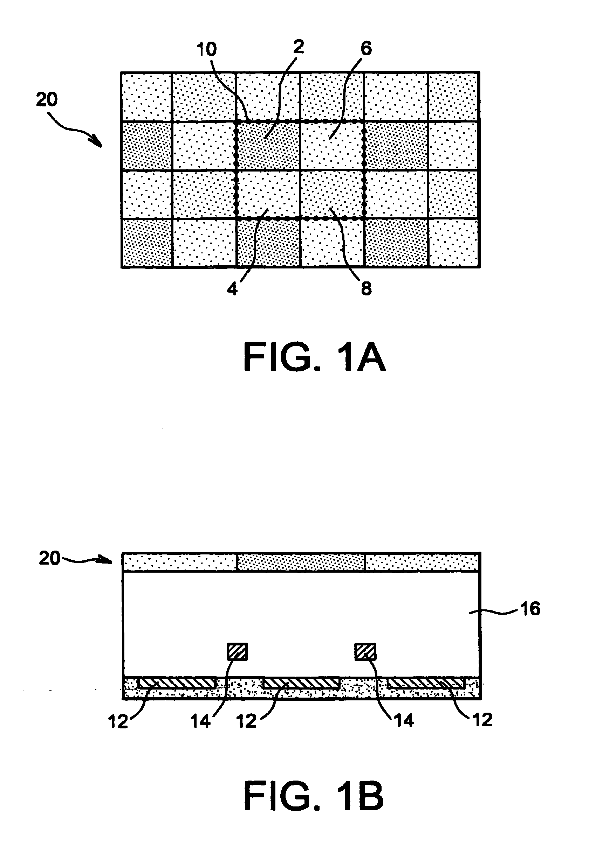

Les capteurs d'images, que l'on trouve notamment dans les téléphones portables ou les appareils photo numériques, sont constitués principalement d'une matrice de photodétecteurs et d'une optique de focalisation. Cette optique permet de former l'image d'un objet sur la matrice de photodétecteurs. Pour obtenir des images en couleurs, il est connu d'aligner un réseau 20 de filtres colorés (représenté sur la figure 1A) sur les pixels du capteur. Le matriçage de ce réseau 20 se fait suivant un schéma dit de « Bayer » et est formé par un filtre rouge 2, deux filtres verts 4 et 6, et un filtre bleu 8 disposés les uns à côté des autres sous la forme d'une matrice carrée. Les quatre photodétecteurs disposés sous ces quatre filtres 2, 4, 6 et 8 forment quatre sous-pixels d'un pixel 10 de la matrice de photodétecteurs. La couleur de l'image est reconstruite numériquement à partir des signaux « mono couleurs » reçus par l'ensemble des pixels de la matrice de photodétecteurs. Ces filtres sont habituellement positionnés à quelques micromètres au-dessus des photodétecteurs 12, d'interconnexions électriques 14 et de couches de passivation diélectriques 16, comme représenté sur la figure 1B.

Dans le domaine des capteurs d'images grand public, un tel capteur est placé au foyer d'une lentille de forte ouverture : l'angle moyen d'incidence des faisceaux lumineux sur le capteur peut varier de -25° à +25° entre les deux coins du capteur et l'ouverture angulaire sur chaque pixel du capteur est typiquement de l'ordre de +/- 10°. Chaque filtre est illuminé sous de multiples incidences et polarisations optiques. Pour réaliser le filtrage des couleurs, il est préférable que les propriétés des filtres (longueur d'onde de transmission, niveau de transmission, largeur spectrale) soient constantes quelque soit l'angle incidence de la lumière.

Le document US 2003/0103150 A1 décrit un réseau unidimensionnel de fentes débouchantes dans une couche métallique réalisant la fonction de filtrage des couleurs. Avec cette géométrie, les calculs montrent que ce sont les fentes qui assurent également la transmission des faisceaux lumineux filtrés à travers la couche métallique. Ils montrent aussi que le filtrage est plus sélectif lorsque les fentes ont une largeur inférieure aux longueurs d'ondes de la lumière visible

Ce type de réseau a notamment pour inconvénient de ne filtrer que la polarisation transverse magnétique de la lumière. De plus, les fentes utilisées dans ce réseau ne permettent pas d'accorder correctement le filtre dans la gamme des longueurs d'ondes visibles compte tenu de la faible largeur spectrale de filtrage pouvant être obtenue avec un tel filtre.

Une autre limitation est liée à l'existence de modes électromagnétiques à la surface de la couche métallique formant le réseau de fentes, appelés plasmons de surface. Ces modes électromagnétiques peuvent être excités lors de la diffraction de la lumière incidente sur les fentes de la couche métallique. Cette excitation, sélective en longueur d'onde et en angle, dégrade la fonction de filtre passe bande réalisée par les fentes.

Le document US 2003/0103150 A1 décrit également un réseau de trous carrés réalisé dans une couche métallique. Un tel réseau permet de réaliser un filtrage dans la gamme des longueurs d'ondes visibles. Toutefois, les longueurs d'ondes filtrées sont ici déterminées en fonction de la période des motifs, ce qui rend ce filtrage très dépendant de l'angle d'incidence par lequel arrive la lumière à filtrer.

La publication "Optical Transmission Properties of a Single Subwavelength Aperture in a Read Metal" de Degiron et al., publiée dans "Optics Communications" 239 (2004), p.61-66, décrit la sensibilité des caractéristiques de filtrage d'une ouverture rectangulaire sur la polarisation.

Le document US 7,166,797 B1 décrit des réseaux d'ouvertures croisées utilisés comme des surfaces sensibles à la fréquence.

### EXPOSÉ DE L'INVENTION

Un but de la présente invention est de proposer un filtre spectral dont les propriétés de transmission soient constantes quelque soit l'angle d'incidence de la lumière reçue et présentant un rendement photométrique élevé.

Pour cela, on propose un filtre spectral selon la revendication indépendante no. 1

On obtient ainsi un filtre polarisant se basant sur la réponse électromagnétique individuelle du ou des trous formés dans la couche métallique du filtre. Contrairement aux solutions de l'art antérieur, et grâce à la forme particulière du trou le filtre peut être formé par un motif unique, c'est-à-dire un seul trou, réalisé dans la couche métallique. La taille minimum du pixel destiné à coopérer avec le filtre est donc fixée par la taille du motif. De plus, tous les filtres d'une matrice de filtres peuvent être jointifs les uns avec les autres.

De plus, un tel filtre permet d'éviter les interactions entre les modes de filtrage et les plasmons de surface en dimensionnant la taille du trou ou, lorsque le filtre comporte un réseau de trous, la taille des trous, de telle sorte que cette interaction n'apparaisse pas pour les angles d'incidences formés par la lumière qui entre dans le filtre.

De plus, la réalisation d'un tel trou est simplifiée par rapport à la réalisation d'une matrice de trous carrés.

Les premiers côtés du trou peuvent avoir une dimension comprise entre environ 40 nm et 60 nm, les seconds côtés du trou pouvant avoir une dimension comprise entre environ 150 nm et 250 nm. Ainsi, le filtre est adapté pour réaliser un filtrage dans la gamme des longueurs d'ondes visibles, c'est-à-dire comprises entre environ 400 nm et 700 nm.

Dans une variante, les premiers côtés du trou peuvent avoir une dimension comprise entre environ 60 nm et 100 nm, les seconds côtés du trou pouvant avoir une dimension comprise entre environ 250 nm et 1000 nm, ou entre 250 nm et 700 nm, ou entre 250 nm et 600 nm. Ainsi, le filtre est adapté pour réaliser un filtrage dans la gamme des longueurs d'ondes infrarouges, supérieures à environ 700 nm, et notamment celles comprises entre environ 700 nm et 2000 nm correspondant à un filtrage en proche infrarouges.

L'invention concerne notamment un filtre spectral comportant au moins une couche métallique structurée par au moins un trou traversant deux faces principales opposées de la couche métallique et comportant, dans un plan parallèle à un plan de l'une des deux faces principales, une première section rectangulaire dont un premier côté a une dimension comprise entre environ 40 nm et 100 nm, et dont un second côté, perpendiculaire au premier côté, a une dimension comprise entre environ 150 nm et 1000 nm, et une seconde section rectangulaire centrée par rapport à la première section rectangulaire, un premier côté de la seconde section étant parallèle au second côté de la première section et ayant une dimension comprise entre environ 40 nm et 100 nm, et dans lequel les dimensions du premier côté de la seconde section sont différentes des dimensions du premier côté de la première section et/ou les dimensions du second côté de la seconde section sont différentes des dimensions du second côté de la première section.

La couche métallique structurée peut être à base d'aluminium et/ou d'argent et/ou d'or, et/ou avoir une épaisseur comprise entre environ 30 nm et 500 nm. L'épaisseur de la couche métallique peut être comprise entre environ 30 nm et 100 nm lorsque le filtre est adapté pour réaliser un filtrage des longueurs d'ondes visibles, ou être comprise entre environ 100 nm et 500 nm lorsque le filtre est adapté pour réaliser un filtrage des longueurs d'ondes infrarouges.

Lorsque le filtre comporte une pluralité de trous traversant la couche métallique, lesdits trous peuvent être régulièrement espacés les uns des autres, pouvant ainsi former un réseau périodique. Ainsi, il est possible de réaliser une surface filtrante de taille supérieure à celle pouvant être obtenue par un filtre comportant un unique trou.

Les trous peuvent être espacés les uns des autres au moins d'une distance comprise entre environ 20 nm et 40 nm. La période de répétition des trous, correspondant à la somme de la dimension du second côté d'un trou (correspondant à la plus grande dimension du trou) et l'espace formé entre deux trous, peut donc être comprise entre environ 170 nm et 1040 nm, ou comprise entre environ 170 nm et 290 nm pour un filtrage dans la gamme des longueurs d'ondes visibles, et entre 270 nm et 1040 nm pour un filtrage dans la gamme des longueurs d'ondes infrarouges. Une telle période de répétition permet d'obtenir une stabilité angulaire compatible avec les exigences des imageurs fonctionnant dans la gamme des longueurs d'ondes visibles ou infrarouges. L'utilisation d'une période de répétition des trous dont la valeur est comprise dans cette gamme permet d'éviter l'excitation résonante de plasmons de surface très sensible angulairement. La période de répétition des trous peut également être comprise entre environ 1,2 et 2 fois la plus grande dimension d'un des trous.

Dans une variante, lorsque le filtre comporte une pluralité de trous traversant la couche métallique, lesdits trous peuvent être irrégulièrement espacés les uns des autres, pouvant ainsi former un réseau apériodique.

Le trou, ou au moins une partie des trous lorsque le filtre comporte une pluralité de trous traversant la couche métallique, comporte dans un plan parallèle à un plan de l'une des deux faces principales de la couche métallique, une seconde section rectangulaire centrée par rapport à la section rectangulaire, appelée première section, un premier côté de la seconde section étant parallèle au second côté de la première section et ayant une dimension comprise entre environ 40 nm et 100 nm, et un second côté de la seconde section étant perpendiculaire au second côté de la première section et ayant une dimension par exemple comprise entre environ 150 nm et 1000 nm, ou entre environ 150 nm et 700 nm, ou entre environ 150 nm et 600 nm. Un tel trou en forme de croix permet d'obtenir de très bonnes performances optiques (forte transmission et insensibilité à l'angle d'incidence formé par la lumière qui entre dans le filtre)

De plus, il est possible que le second côté de la seconde section ait une dimension inférieure ou égale à environ 100 nm. Ainsi, seule l'une des deux polarisations est transmise, par exemple la polarisation transverse magnétique.

Lorsque le filtre est adapté pour réaliser un filtrage dans la gamme des longueurs d'ondes visibles, le premier côté de la seconde section du trou peut avoir une dimension comprise entre environ 40 nm et 60 nm, le second côté de la seconde section du trou pouvant avoir une dimension comprise entre environ 150 nm et 250 nm.

Dans une variante, lorsque le filtre est adapté pour réaliser un filtrage dans la gamme des longueurs d'ondes infrarouges, le premier côté de la seconde section du trou peut avoir une dimension comprise entre environ 60 nm et 100 nm, le second côté de la seconde section du trou pouvant avoir une dimension comprise entre environ 250 nm et 1000 nm, ou entre environ 250 nm et 700 nm, ou entre environ 250 nm et 600 nm.

Les deux sections rectangulaires du trou sont centrées l'une par rapport à l'autre, c'est-à-dire que la première et la seconde sections rectangulaires ont un centre commun. Ainsi, la première et la seconde sections du trou forment un motif en forme de croix.

Selon l'invention, la seconde section du trou a des dimensions différentes de celles de la première section du trou c'est-à-dire que les dimensions du premier et/ou du second côté de la seconde section sont différentes des dimensions du premier et/ou du second côté de la première section. Ainsi, il est par exemple possible de réaliser, avec un seul trou, le filtrage d'une première couleur dans une polarisation, et le filtrage d'une seconde couleur dans l'autre polarisation.

Le ou les trous peuvent être remplis au moins en partie par un matériau diélectrique transparent ou au moins partiellement transparent.

L'invention concerne également une matrice de filtres spectraux comportant au moins une pluralité de filtres spectraux tels que décrits précédemment, au moins deux des filtres spectraux étant aptes à réaliser un filtrage selon des longueurs d'ondes, ou des gammes de longueurs d'ondes, différentes, les dimensions des premiers côtés des sections d'au moins un trou d'un premier des deux filtres étant sensiblement similaires ou différentes des dimensions des premiers côtés des sections d'au moins un trou d'un second des deux filtres, les dimensions des seconds côtés des sections du trou du premier des deux filtres étant différentes des dimensions des seconds côtés des sections du trou du second des deux filtres.

La matrice de filtres peut comporter au moins quatre filtres spectraux formant un filtre de Bayer.

L'invention concerne également un capteur d'images comportant au moins une matrice de filtres spectraux telle que décrite précédemment, et une matrice de photodétecteurs, chaque photodétecteur étant disposé en regard d'un des filtres spectraux.

La matrice de photodetecteurs peut être disposée contre un substrat, par exemple à base de semi-conducteur tel que du silicium, comprenant des circuits de lecture et de traitement numérique, et/ou ayant une épaisseur comprise entre environ 100 nm (localement autour de la zone de détection) et 500 nm dans le cas d'un substrat aminci, ou d'une épaisseur égale à environ 500 µm lorsque le substrat n'est pas aminci (donc une épaisseur comprise entre environ 100 nm et 500 µm).

Le capteur peut comporter en outre une couche à base d'au moins un matériau diélectrique disposée entre la matrice de filtres spectraux et la matrice de photodétecteurs, ou entre la matrice de photodétecteurs et un second substrat.

Dans ce cas, la couche à base du matériau diélectrique peut comporter une pluralité de contacts électriques reliés aux photodétecteurs et/ou aux circuits de lecture du substrat et/ou étant à base de nitrure de silicium et/ou d'oxyde de silicium et/ou de silicium poreux.

Le capteur d'images peut comporter en outre une couche de protection à base d'au moins un matériau diélectrique, par exemple à base de polymère, disposée contre la matrice de filtres.

Dans une variante, la matrice de filtres spectraux peut être disposée entre deux couches d'épaisseur comprise entre environ 10 nm et 500 nm, d'indice optique n < 1,6 ou n < 2, et à base d'au moins un matériau diélectrique tel que du SiO₂, et/ou du SiOC, et/ou du SiOC nanoporeux et/ou de la silice nanoporeuse et/ou un polymère. Ces deux couches peuvent être transparentes ou au moins partiellement transparentes dans le domaine des longueurs d'ondes à filtrer. Ces deux couches permettent ainsi de garantir une stabilité angulaire du filtre en évitant l'excitation résonante des plasmons de surface sur la couche métallique dans laquelle sont réalisés les filtres spectraux.

On propose également un procédé de réalisation d'un filtre spectral selon la revendication no.15.

Enfin, on propose également un procédé de réalisation d'un filtre spectral selon la revendication no. 16.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1A représente un réseau de filtres colorés selon un schéma de Bayer,
- la figure 1B représente un réseau de filtres colorés disposé au-dessus de photodétecteurs,
- les figures 2A et 2B représentent respectivement une vue en coupe de dessus et une vue en coupe latérale d'une partie d'un capteur d'images comparatif
- les figures 3A à 3B représentent respectivement une vue en coupe de dessus et une vue en coupe latérale d'une partie d'un capteur d'images, selon un second exemple comparatif et une variante
- La figure 3C représente un premier mode de réalisation d'un filtre selon l'invention,
- la figure 4 représente des courbes de simulation de transmissions par des filtres spectraux comparatifs, comportant des trous en forme de croix de dimensions différentes,
- la figure 5 représente des courbes de simulation de transmissions d'un filtre comparatif réalisé dans une couche d'aluminium de 40 nm d'épaisseur traversée par un trou unique en forme de croix ou par un réseau de trous en forme de croix,
- la figure 6 représente des courbes de transmission d'un filtre comparatif réalisé dans une couche d'aluminium de 40 nm d'épaisseur traversée par un trou unique en forme de croix pour une lumière arrivant sur le filtre avec plusieurs angles incidents,
- la figure 7 représente des courbes de la transmission d'un filtre comparatif réalisé dans une couche d'aluminium de 40 nm d'épaisseur traversée par plusieurs trous en forme de croix pour une lumière arrivant sur le filtre avec plusieurs angles incidents.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

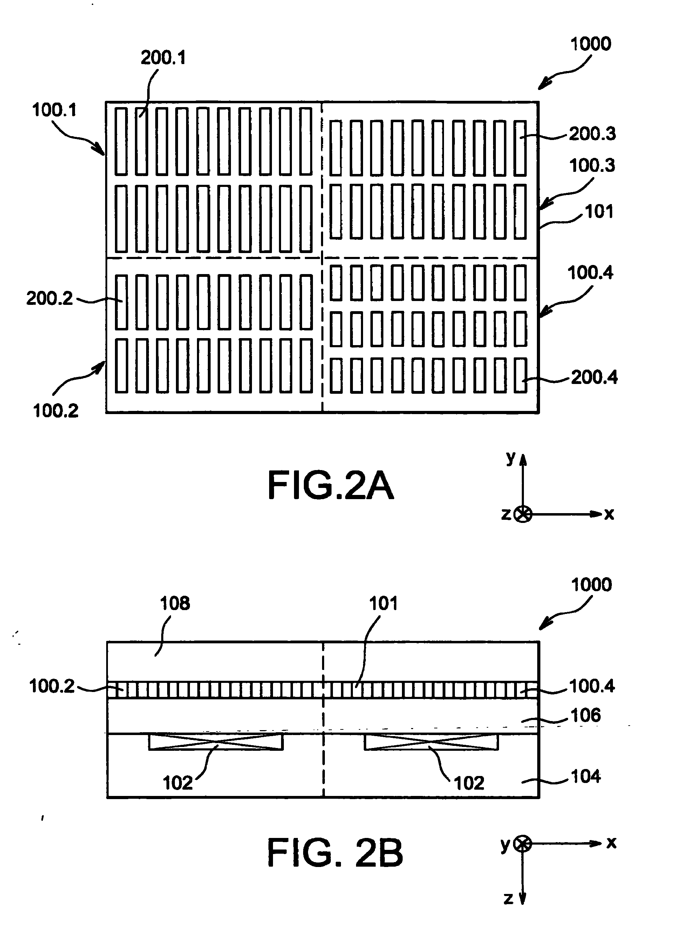

On se réfère aux figures 2A et 2B qui représentent respectivement une vue en coupe de dessus et une vue en coupe latérale d'une partie d'un capteur d'images 1000 comparatif.

Ce capteur d'images 1000 comporte une pluralité de pixels. Sur les figures 2A et 2B, un seul de ces pixels est représenté. Chaque pixel comporte une matrice de filtres 100.1 à 100.4, dont la répartition, en fonction des longueurs d'ondes filtrées, correspond à la répartition d'un filtre de Bayer. La matrice de filtres 100.1 à 100.4 est réalisée dans une couche métallique structurée 101 qui est disposée au-dessus d'une matrice de photodétecteurs 102. Chaque pixel du capteur 1000 est donc formé par quatre sous-pixels comportant chacun un des filtres 100.1 à 100.4 apte à réaliser le filtrage dans une gamme de longueurs d'ondes donnée (correspondant ici à un filtrage de l'une des couleurs rouge, vert ou bleu) et un photodétecteur 102.

Le ou les métaux à partir desquels la couche métallique 101 est réalisée sont choisis afin que la couche métallique 101 soit la moins absorbante possible dans la gamme des longueurs d'ondes transmises, afin de maximiser la transmission lumineuse des filtres 100.1 à 100.4 dans les gammes de longueurs d'ondes souhaitées. Lorsque les filtres 100.1 à 100.4 sont destinés à réaliser un filtrage de longueurs d'ondes dans le domaine du visible, comme c'est le cas dans ce premier mode de réalisation, la couche métallique 101 est à base d'aluminium, et/ou d'argent, et/ou d'or, ou tout autre métal adapté. Toutefois, en fonction des longueurs d'ondes destinées à être filtrées par les filtres, il est possible que la couche métallique 101 soit à base d'autres matériaux, notamment pour des longueurs d'ondes supérieures à celles du domaine du visible. L'épaisseur de la couche métallique 101 a également une influence sur la transmission réalisée par les filtres formés dans cette couche. De manière générale, la couche métallique 101 peut avoir une épaisseur comprise entre environ 50 nm et quelques centaines de nm, par exemple 500 nm. Cette épaisseur est choisie en fonction des longueurs d'ondes à transmettre, de la sélectivité du filtre souhaitée ainsi que de la nature des autres matériaux des filtres 100.1 à 100.4.

Chacun des filtres 100.1 à 100.4 comporte une pluralité de trous 200.1 à 200.4 traversant la couche métallique 101 et régulièrement répartis sur dans cette couche métallique 101. Chacun des trous 200.1 à 200.4 a, dans un plan parallèle au plan (x,y) correspondant au plan de l'une des faces principales de la couche métallique 101, une section de forme rectangulaire.

Les dimensions des côtés des sections rectangulaires des trous 200.1 à 200.4 selon l'axe x représenté sur la figure 2A sont sensiblement similaires les unes aux autres et par exemple égales à environ 60 nm. De manière générale, les dimensions des côtés des sections rectangulaires des trous 200.1 à 200.4 selon l'axe x pourront être comprises entre environ 40 nm et 60 nm dans le cas d'un capteur d'images 1000 fonctionnant dans la gamme des longueurs d'ondes visibles, ou comprises entre environ 60 nm et 100 nm dans le cas d'un capteur d'images 1000 fonctionnant dans la gamme des longueurs d'ondes infrarouges.

Par contre, les dimensions des côtés de ces sections selon l'axe y diffèrent d'un filtre à l'autre, et peuvent être comprises entre environ 150 nm et 250 nm. Ainsi, chacun des filtres 100.1 à 100.4 peut réaliser le filtrage d'une gamme particulière de longueurs d'ondes, cette gamme étant déterminée par la dimension des cotés des sections rectangulaires des trous selon l'axe y. Dans l'exemple comparatif des figures 2A et 2B, le filtre 100.1 ne laisse passer que les longueurs d'ondes comprises entre environ 620 nm et 700 nm, correspondant à la couleur rouge. Pour cela, les trous 200.1 ont leurs côtés selon l'axe y de dimension égale à environ 240 nm. Les filtres 100.2 et 100.3 ne laissent passer que les longueurs d'ondes comprises entre environ 500 nm et 578 nm, correspondant à la couleur verte. Pour cela, les trous 200.2 et 200.3 ont leurs côtés selon l'axe y de dimension égale à environ 200 nm. Enfin, le filtre 100.4 ne laisse passer que les longueurs d'ondes comprises entre environ 446 nm et 500 nm, correspondant à la couleur bleu. Pour cela, les trous 200.4 ont leurs côtés selon l'axe y de dimension égale à environ 150 nm.

Les dimensions des côtés des sections rectangulaires des trous 200.1 à 200.4 selon l'axe y pourront être comprises entre environ 150 nm et 250 nm dans le cas d'un capteur d'images 1000 fonctionnant dans la gamme des longueurs d'ondes visibles, ou comprise entre environ 250 nm et 1000 nm dans le cas d'un capteur d'images 1000 fonctionnant dans la gamme des longueurs d'ondes infrarouges.

Les trous 200.1 à 200.4 sont ici remplis par un matériau diélectrique, par exemple du SiO₂, et/ou du SiOC, et/ou du SiOC nanoporeux et/ou de la silice nanoporeuse et/ou un polymère. Ce matériau diélectrique est transparent aux longueurs d'ondes qui sont destinées à être transmises par les filtres 100.1 à 100.4. L'indice de réfraction du matériau diélectrique peut de préférence être inférieur à 1,6, participant ainsi à garantir la stabilité angulaire des filtres 100.1 à 100.4, en évitant l'excitation résonante de plasmons de surface sur la couche métallique 101.

La matrice de photodétecteurs 102 est réalisée sur un substrat 104, par exemple à base de semi-conducteur tel que du silicium, et/ou du GaS, et/ou du CdHgTe, qui peut intégrer des circuits de lecture et de traitements numériques des signaux de sortie des photodétecteurs 102. La matrice de filtres 100.1 à 100.4 est séparée de la matrice de photodétecteurs 102 par une couche « support » 106, par exemple à base d'au moins un diélectrique tel que du nitrure de silicium et/ou de l'oxyde de silicium poreux ou non. Cette couche support 106 permet de supporter mécaniquement la matrice de filtres 100.1 à 100.4, mais peut également réaliser une concentration des faisceaux incidents sur les photodétecteurs 102 et/ou la prise de contacts électriques sur les photodétecteurs 102 et/ou l'isolation et la passivation de la matrice de photodétecteurs 102.

La matrice de filtres 100.1 à 100.4 est recouverte d'une couche de « protection » 108, par exemple à base de matériaux polymères, et/ou d'oxyde de silicium, et/ou de silice, et/ou de SiOₓ, et/ou de SiₓN_{y}, et/ou de silicium, servant de protection chimique et mécanique de la matrice de filtres 100.1 à 100.4 et/ou réalisant une concentration des faisceaux lumineux sur les photodétecteurs 102.

La lumière à détecter passe tout d'abord au travers de la couche de protection 108, puis est filtrée par la matrice de filtres 100.1 à 100.4, traverse ensuite la couche support 106 pour arriver enfin sur la matrice de photodétecteurs 102. Les matériaux de ces éléments du capteur 1000 traversés par la lumière à détecter sont donc choisis au moins partiellement transparents ou totalement transparents aux longueurs d'ondes destinées à être transmises.

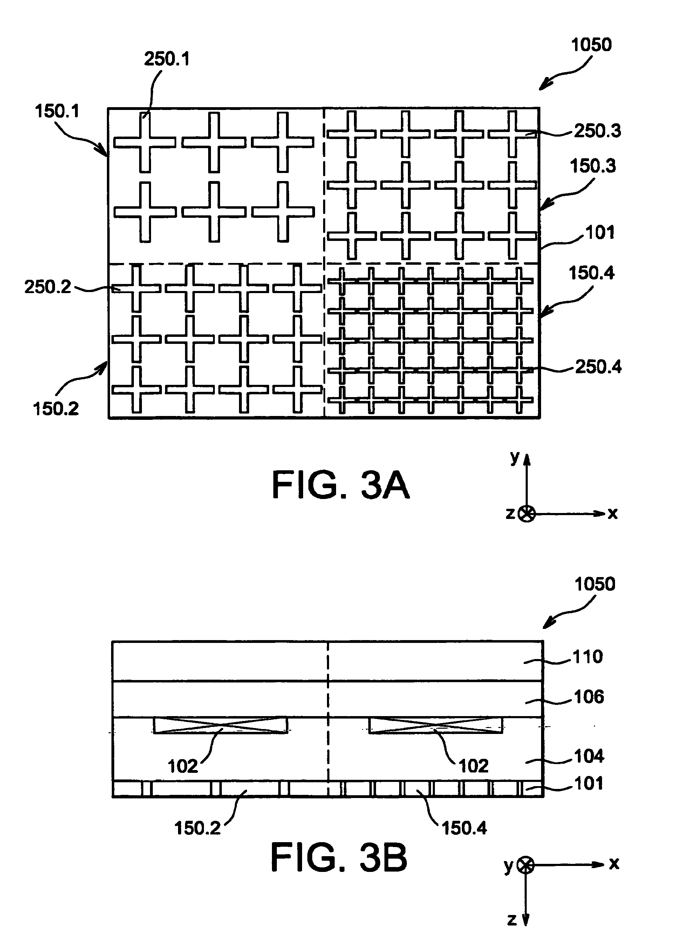

On se réfère maintenant aux figures 3A et 3B qui représentent respectivement une vue en coupe de dessus et une vue en coupe latérale d'une partie d'un capteur d'images 1050 selon un second exemple comparatif.

Comme dans le premier exemple comparatif, le capteur 1050 comporte une pluralité de pixels, chaque pixel comportant une matrice de quatre filtres 150.1 à 150.4 formant un filtre de Bayer et réalisée dans une couche métallique 101, par exemple de nature similaire à celle utilisée dans le premier mode de réalisation.

Chacun des filtres 150.1 à 150.4 comporte une pluralité de trous 250.1 à 250.4 traversant la couche métallique 101 et régulièrement répartis sur dans cette couche métallique 101. Chacun des trous 250.1 à 250.4 a, dans un plan parallèle au plan (x,y) correspondant au plan de l'une des faces principales de la couche métallique 101, une première section rectangulaire dont un premier côté (dimension selon l'axe x) a une dimension comprise entre environ 40 nm et 60 nm, ou comprise entre 60 nm et 100 nm dans le cas d'un capteur infrarouge, et un second côté (dimension selon l'axe y), perpendiculaire au premier côté, a une dimension comprise entre environ 150 nm et 250 nm, ou comprise entre environ 250 nm et 1000 nm dans le cas d'un capteur infrarouge. Chacun des trous 250.1 à 250.4 comporte également dans ce même plan une seconde section rectangulaire centrée par rapport à la première section rectangulaire. Un premier côté de la seconde section, parallèle au second côté de la première section (c'est-à-dire parallèle à l'axe y), a une dimension comprise entre environ 40 nm et 60 nm, ou entre environ 60 nm et 100 nm, et un second côté de la seconde section, perpendiculaire au second côté de la première section (c'est-à-dire parallèle à l'axe x), a une dimension comprise entre environ 150 nm et 250 nm, ou entre environ 250 nm et 1000 nm. Chacun des trous 250.1 à 250.4 comporte donc dans ledit plan une section en forme de croix, chaque croix étant formée par le croisement d'une première section rectangulaire et d'une seconde section rectangulaire.

Dans cet exemple comparatif, les dimensions des premiers et seconds côtés des premières et secondes sections des trous formant les croix diffèrent d'un filtre à l'autre. Dans une variante, il est possible que les dimensions des premiers côtés des première et seconde sections soient similaires pour les quatre filtres 150.1 à 150.4. Dans ce cas, le choix des gammes de longueurs d'ondes filtrées dépend donc du choix des dimensions des seconds côtés des première et seconde sections, qui sont alors différentes d'un filtre à l'autre. Ces dimensions des seconds côtés des première et seconde sections peuvent par exemple être similaires à celles des seconds côtés précédemment décrites dans le premier exemple comparatif.

Comme dans le premier exemple comparatif, les trous 250.1 à 250.4 sont remplis par un matériau diélectrique, par exemple similaire à celui précédemment décrit.

La matrice de photodétecteurs 102 du capteur 1050 est ici réalisée sur un substrat 104, par exemple à base de silicium, et recouverte par une couche support 106 par exemple similaire à celle précédemment décrite. Cet empilement est alors reporté sur un second substrat 110, permettant ainsi de réaliser un amincissement du premier substrat 104, par exemple par un polissage mécano-chimique. Les filtres 150.1 à 150.4 sont ensuite réalisés dans la couche métallique 101 qui est disposée contre le substrat aminci 104.

Dans cet second exemple comparatif, la lumière à détecter est donc tout d'abord filtrée par la matrice de filtres 150.1 à 150.4, traverse ensuite le substrat 104 pour arriver enfin sur la matrice de photodétecteurs 102. La planarisation du substrat 104 permet de limiter l'absorption de la lumière incidente par le matériau constituant le substrat 104.

Dans une variante , la couche métallique 101 comportant les filtres peut être avantageusement disposée entre deux couches diélectriques, par exemple des couches minces d'épaisseur comprise entre environ 10 nm à 500 nm, d'indice optique faible, par exemple inférieur à 2 ou inférieur à 1,6, et à base de SiO₂, et/ou de SiOC, et/ou de SiOC nanoporeux et/ou de silice nanoporeuse et/ou de polymère. Ainsi, ces deux couches diélectriques sont transparentes ou au moins partiellement transparentes dans le domaine des longueurs d'onde à détecter et permettent de garantir une certaine stabilité angulaire du filtre en évitant une excitation de plasmons en surface de la couche métallique 101.

Ces deux couches diélectriques peuvent également présenter des structurations, permettant notamment de diminuer leur indice de transmission moyen. Ces structurations peuvent être similaires ou non à celles de la couche métallique 101, c'est-à-dire aux trous rectangulaires ou en forme de croix réalisés dans la couche métallique 101. Ces structurations réalisées dans les couches diélectriques peuvent être débouchantes, c'est-à-dire réalisées à travers toute l'épaisseur de l'une ou les deux couches diélectriques, ou non. Ces structurations peuvent également être par exemple des trous de section rectangulaire ou en forme de croix, dont les dimensions et/ou l'espacement diffèrent par rapport aux trous réalisés dans la couche métallique 101. Enfin, ces structurations de ces deux couches diélectriques peuvent être différentes d'un photodétecteur à l'autre.

Chacun des filtres spectraux 100.1 à 100.4 et 150.1 à 150.4 précédemment décrits comportent une pluralité de trous régulièrement espacés les uns des autres, c'est-à-dire disposés en réseau. Toutefois-, chacun de ces filtres spectraux peut ne comporter qu'un seul trou étant donné que le phénomène de filtrage est basé sur une réponse individuelle des trous. Dans un autre mode , chacun des filtres peut comporter une pluralité de trous disposés en réseau apériodique, c'est-à-dire espacés de manière non régulière les uns des autres.

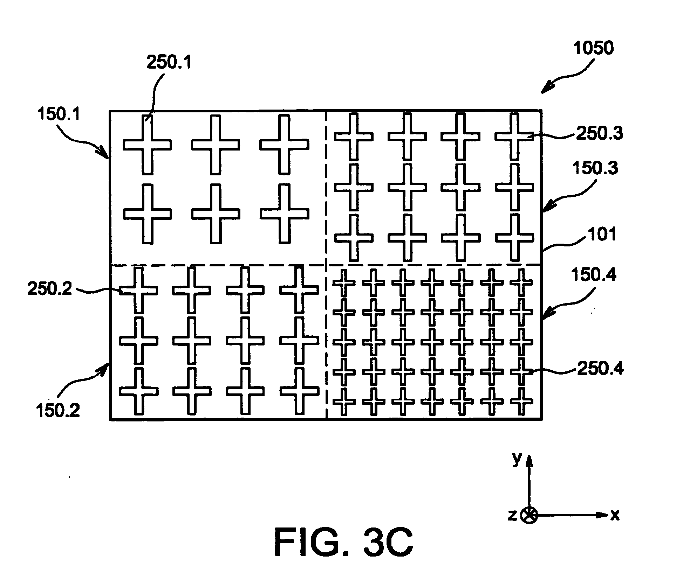

La figure 3C représente une vue en coupe de dessus d' une partie du capteur d'images 1050 selon un premier mode de réalisation.

Par rapport au capteur d'images 1050 représenté sur la figure 3A, le capteur d'images 1050 représenté sur cette figure 3C comporte des filtres spectraux 150.1 - 150.4 comprenant tous des trous 250.1 - 250.4 formant des croix asymétriques. Chacun des trous 250.1 à 250.4 a, dans un plan parallèle au plan (x,y) correspondant au plan de l'une des faces principales de la couche métallique 101, une première section rectangulaire dont un premier côté (dimension selon l'axe x) a une dimension comprise entre environ 40 nm et 60 nm, ou comprise entre 60 nm et 100 nm dans le cas d'un capteur infrarouge, et un second côté (dimension selon l'axe y), perpendiculaire au premier côté, a une dimension comprise entre environ 150 nm et 250 nm, ou comprise entre environ 250 nm et 1000 nm dans le cas d'un capteur infrarouge. Chacun des trous 250.1 à 250.4 comporte également dans ce même plan une seconde section rectangulaire centrée par rapport à la première section rectangulaire. Un premier côté de la seconde section, parallèle au second côté de la première section (c'est-à-dire parallèle à l'axe y), a une dimension comprise entre environ 40 nm et 60 nm, ou entre environ 60 nm et 100 nm, et un second côté de la seconde section, perpendiculaire au second côté de la première section (c'est-à-dire parallèle à l'axe x), a une dimension comprise entre environ 150 nm et 250 nm, ou entre environ 250 nm et 1000 nm. Toutefois, pour chaque trou, les dimensions du second côté de la seconde section sont ici différentes des dimensions du second côté de la première section. Ainsi, il est possible de réaliser, avec un seul trou, le filtrage d'une première longueur d'onde dans une polarisation (par exemple la polarisation transverse magnétique), et le filtrage d'une seconde longueur d'onde dans l'autre polarisation (polarisation transverse électrique).

De plus, lorsque que le second côté de la première ou de la seconde section a une dimension inférieure ou égale à environ 100 nm, seule l'une des deux polarisations est transmise, par exemple la polarisation transverse magnétique.

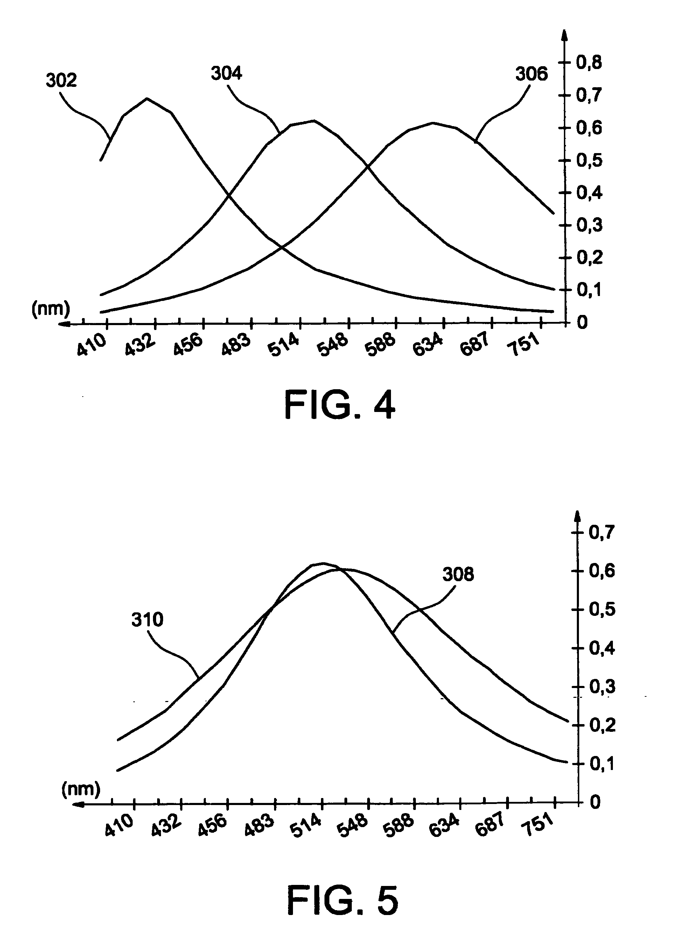

La figure 4 représente la transmission réalisée par trois filtres spectraux comparatifs comportant chacun un unique trou en forme de croix réalisé dans une couche d'aluminium d'épaisseur égale à environ 40 nm. Les courbes 302, 304 et 306 représentent la valeur normalisée de la transmission en fonction de la longueur d'onde pour chacun des trois filtres. Les dimensions des premiers côtés des première et seconde sections des trous des trois filtres sont égales à 60 nm. Les dimensions des seconds côtés des première et seconde sections des trous sont égales à 150 nm, 200 nm et 240 nm pour les filtres correspondant respectivement aux courbes 302, 304 et 306. On voit donc que le choix des dimensions des seconds côtés des première et seconde sections des trous permet de sélectionner la gamme de longueurs d'onde à filtrer, correspondant ici aux couleurs rouge, vert et bleu. Contrairement à un trou rectangulaire, les transmissions obtenues en polarisation TE et TM pour un trou en croix sont identiques à incidence normale. Ainsi, pour réaliser le filtrage d'un faisceau de lumière non polarisé, un filtre comportant un trou en forme de croix permet d'obtenir un meilleur gain en transmission.

Comme précédemment décrit, chaque filtre peut comporter plusieurs trous disposés en réseaux. Les courbes 308 et 310 représentées sur la figure 5 illustrent une simulation de la transmission d'un filtre comparatif réalisé dans une couche d'aluminium de 40 nm d'épaisseur, respectivement traversée par un trou unique en forme de croix et par un réseau de trous en forme de croix, la dimension des premiers côtés des sections des trous étant égale à environ 60 nm et la dimension des seconds côtés des sections des trous étant égale à environ 200 nm. Le réseau de trous est de forme carré, comme par exemple pour les filtres représentés sur les figures 2A et 3A, et que la période de ce réseau est égale à environ 250 nm. En comparant les courbes 308 et 310, on voit que l'utilisation d'un réseau de trous plutôt qu'un trou unique entraîne un léger décalage de la transmission vers de plus grandes longueurs d'ondes ainsi qu'un élargissement spectral de la résonance. Une légère variation des dimensions des premiers côtés des premières et secondes sections des trous permet toutefois de compenser ces effets dus à l'interaction optique entre les trous et peut être pris en compte lors du dimensionnement des trous.

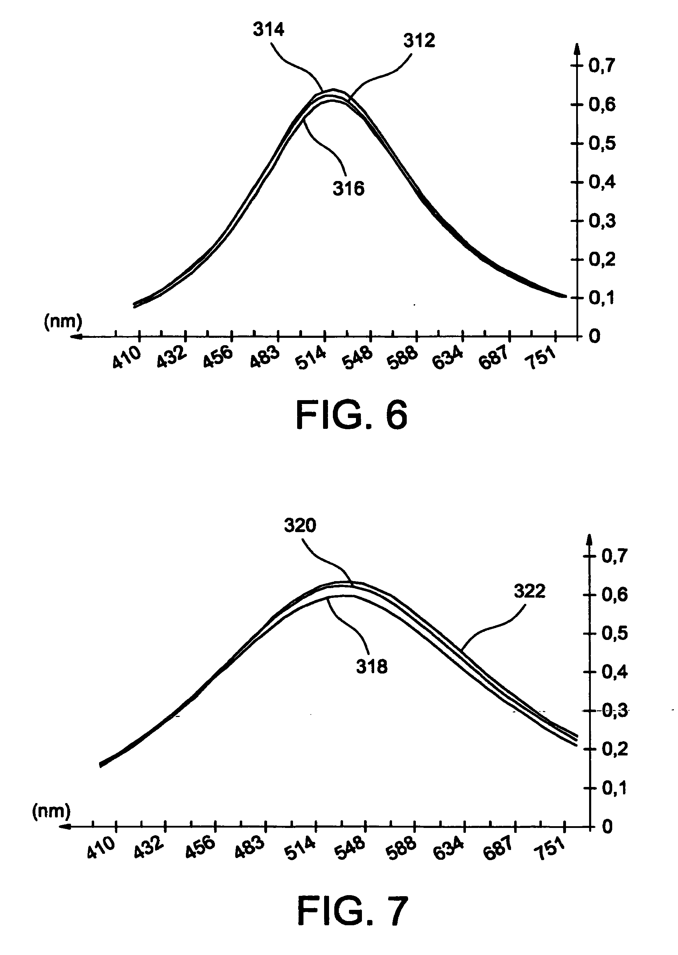

L'utilisation d'un motif en forme de croix permet d'avoir un filtre dont le comportement angulaire est très stable, à la fois pour un filtre comportant un seul trou ou une pluralité de trous disposés en réseau. Les courbes 312, 314 et 316 de la figure 6 représentent. la dépendance de la transmission d'un filtre comparatif réalisé dans une couche d'aluminium de 40 nm d'épaisseur traversée par un trou unique en forme de croix dont la dimension des premiers côtés des sections est égale à environ 60 nm et la dimension des seconds côtés des sections est égale à environ 200 nm, en fonction de l'angle d'incidence de la lumière. Les courbes 312, 314 et 316 représentent la valeur des coefficients de transmission pour une lumière arrivant sur le filtre avec un angle respectivement égal à 0°, 5° et 15°. Ces courbes permettent d'observer que pour un angle d'incidence égale à 15°, les transmissions TE et TM s'écartent très peu de la transmission calculée à incidence nulle. Les courbes 318, 320 et 322 de la figure 7 représentent cette même dépendance de la transmission du filtre en fonction d'un angle d'incidence respectivement égal à 0°, 5° et 15°, pour un filtre comportant un réseau de trous similaires au trou utilisé pour les simulations représentées sur la figure 6, et dont la période de répétition est égale à environ 250 nm.

## Revendications

1. Filtre spectral (150.1-150.4) comportant au moins une couche métallique (101) structurée par au moins un trou (250.1-250.4) traversant deux faces principales opposées de la couche métallique (101) et comportant, dans un plan parallèle à un plan de l'une des deux faces principales, une première section rectangulaire dont un premier côté a une dimension comprise entre environ 40 nm et 100 nm, et dont un second côté, perpendiculaire au premier côté, a une dimension comprise entre environ 150 nm et 1000 nm, et une seconde section rectangulaire centrée par rapport à la première section rectangulaire, un premier côté de la seconde section étant parallèle au second côté de la première section et ayant une dimension comprise entre environ 40 nm et 100 nm, et dans lequel les dimensions du premier côté de la seconde section sont différentes des dimensions du premier côté de la première section et/ou les dimensions du second côté de la seconde section sont différentes des dimensions du second côté de la première section, afin d'obtenir un filtre sensible à la polarisation.

2. Filtre spectral (150.1-150.4) selon la revendication 1, dans lequel la couche métallique (101) structurée est à base d'aluminium et/ou d'argent et/ou d'or, et/ou a une épaisseur comprise entre environ 30 nm et 500 nm.

3. Filtre spectral (150.1-150.4) selon l'une des revendications précédentes, dans lequel, lorsque le filtre (150.1-150.4) comporte une pluralité de trous (250.1-250.4) traversant la couche métallique (101), lesdits trous (250.1-250.4) sont régulièrement espacés les uns des autres.

4. Filtre spectral (150.1-150.4) selon la revendication 3, dans lequel les trous (250.1-250.4) sont espacés les uns des autres selon une période comprise entre environ 170 nm et 1040 nm.

5. Filtre spectral (150.1-150.4) selon l'une des revendications précédentes, dans lequel un second côté de la seconde section a une dimension comprise entre environ 150 nm et 1000 nm.

6. Filtre spectral (150.1-150.4) selon la revendication 5, dans lequel les premiers côtés de la première et de la seconde sections ont des dimensions sensiblement similaires ou les seconds côtés de la première et de la seconde' section ont des dimensions sensiblement similaires.

7. Filtre spectral (150.1-150.4) selon l'une des revendications précédentes, dans lequel le ou les trous (250.1-250.4) sont remplis au moins en partie par un matériau diélectrique au moins partiellement transparent.

8. Matrice de filtres spectraux comportant au moins une pluralité de filtres spectraux (150.1-150.4) selon l'une des revendications 1 à 7, au moins deux des filtres spectraux (150.1-150.4) étant aptes à réaliser un filtrage selon des longueurs d'ondes, ou des gammes de longueurs d'ondes, différentes, les dimensions des premiers côtés des sections d'au moins un trou (250.1-250.4) d'un premier des deux filtres (150.1-150.4) étant sensiblement similaires ou différentes des dimensions des premiers côtés des sections d'au moins un trou (250.1-250.4) d'un second des deux filtres (150.1-150.4), les dimensions des seconds côtés des sections du trou (250.1-250.4) du premier des deux filtres (150.1-150.4) étant différentes des dimensions des seconds côtés des sections du trou (250.1-250.4) du second des deux filtres (150.1-150.4).

9. Matrice de filtres spectraux selon la revendication 8, comportant au moins quatre filtres spectraux (150.1-150.4) formant un filtre de Bayer.

10. Capteur d'images (1050) comportant au moins une matrice de filtres spectraux (150.1-150.4) selon l'une des revendications 8 ou 9, et une matrice de photodétecteurs (102), chaque photodétecteur (102) étant disposé en regard ;d'un des filtres spectraux (150.1-150.4).

11. Capteur d'images (1050) selon la revendication 10, dans lequel la matrice de photodétecteurs (102) est disposée contre un substrat (104) comprenant des circuits de lecture et de traitement numérique et/ou ayant une épaisseur comprise entre environ 100 nm et 500 µm.

12. Capteur d'images (1050) selon l'une des revendications 10 ou 11, comportant en outre une couche (106) à base d'au moins un matériau diélectrique disposée entre la matrice de filtres spectraux (150.1-150.4) et la matrice de photodétecteurs (102), ou entre la matrice de photodétecteurs (102) et un second substrat (110).

13. Capteur d'images (1050) selon la revendication 12, dans lequel la couche (106) à base du matériau diélectrique comporte une pluralité de contacts électriques reliés aux photodétecteurs (102) et/ou aux circuits de lecture du substrat (104) et/ou est à base de nitrure de silicium et/ou d'oxyde de silicium et/ou de silicium poreux.

14. Capteur d'images (1050) selon l'une des revendications 10 à 13, comportant en outre une couche de protection (108) à base d'au moins un matériau diélectrique disposée contre la matrice de filtres, ou dans lequel la matrice de filtres est disposée entre deux couches à base d'au moins un matériau diélectrique, d'épaisseur comprise entre environ 10 nm et 500 nm, et d'indice optique n < 1,6.

15. Procédé de réalisation d'un filtre spectral (150.1-150.4) selon l'une des revendications 1 à 7, comportant au moins les étapes suivantes :
- structuration d'une couche diélectrique, formant au moins une portion diélectrique entourée par des zones de vides traversant deux faces principales opposées de la couche diélectrique, la portion diélectrique comportant, dans un plan parallèle à un plan de l'une des deux faces principales, au moins une première section rectangulaire dont un premier côté a une dimension comprise entre environ 40 nm et 100 nm, et dont un second côté, perpendiculaire au premier côté, a une dimension comprise entre environ 150 nm et 1000 nm, et une seconde section rectangulaire centrée par rapport à la première section rectangulaire, un premier côté de la seconde section étant parallèle au second côté de la première section et ayant une dimension comprise entre environ 40 nm et 100 nm,
- dépôt d'une couche métallique (101) au moins dans les zones de vide formées dans la couche diélectrique autour de la portion diélectrique,
- planarisatior de la couche métallique (101),
- suppression de la portion diélectrique.

16. Procédé de réalisation d'un filtre spectral (150.1-150.4) selon l'une des revendications 1 à 7, comportant au moins une étape de gravure d'une couche métallique (101) selon un motif comportant au moins un trou (250.1-250.4) traversant deux faces principales opposées de la couche métallique (101) et comportant, dans un plan parallèle à un plan de l'une des deux faces principales, une première section rectangulaire dont un premier côté a une dimension comprise entre environ 40 nm et 100 nm, et dont un second côté, perpendiculaire au premier côté, a une dimension comprise entre environ 150 nm et 1000 nm, et une seconde section rectangulaire centrée par rapport à la première section rectangulaire, un premier côté de la seconde section étant parallèle au second côté de la première section et ayant une dimension comprise entre environ 40 nm et 100 nm.

17. Procédé selon l'une des revendications 15 ou 16, dans lequel un second côté de la seconde section a une dimension comprise entre environ 150 nm et 1000 nm.

## Patentansprüche

1. Spektralfilter (150.1-150.4), umfassend wenigstens eine metallische Schicht (101), welche durch wenigstens ein Loch (250.1-250.4) strukturiert ist, welches zwei gegenüberliegende Haupt-Seiten der metallischen Schicht (101) durchquert und, in einer zu einer Ebene von einer der zwei Haupt-Seiten parallelen Ebene, einen ersten rechteckigen Bereich umfasst, von dem eine erste Seite eine Abmessung hat, die zwischen ungefähr 40 nm und 100 nm liegt, und von dem eine zweite Seite, senkrecht zu der ersten Seite, eine Abmessung hat, welche zwischen ungefähr 150 nm und 1000 nm liegt, und einen zweiten rechteckigen Bereich umfasst, der in Bezug auf den ersten rechteckigen Bereich zentriert ist, wobei eine erste Seite von dem zweiten Bereich parallel zu der zweiten Seite von dem ersten Bereich ist und eine Abmessung hat, die zwischen ungefähr 40 nm und 100 nm liegt, und wobei die Abmessungen von der ersten Seite des zweiten Bereichs verschieden von den Abmessungen der ersten Seite des ersten Bereichs sind oder/und die Abmessungen der zweiten Seite des zweiten Bereichs verschieden von den Abmessungen der zweiten Seite des ersten Bereichs sind, um einen für die Polarisation empfindlichen Filter zu erhalten.

2. Spektralfilter (150.1-150.4) nach Anspruch 1, wobei die strukturierte metallische Schicht (101) auf Aluminium oder/und Silber oder/und Gold basiert oder/und eine Dicke hat, die zwischen ungefähr 30 nm und 500 nm liegt.

3. Spektralfilter (150.1-150.4) nach einem der vorhergehenden Ansprüche, wobei dann, wenn der Filter (150.1-150.4) eine Mehrzahl von Löchern (250.1-250.4) umfasst, welche die metallische Schicht (101) durchqueren, die Löcher (250.1-250.4) voneinander regelmäßig beabstandet sind.

4. Spektralfilter (150.9-150.4) nach Anspruch 3, wobei die Löcher (250.1-250.4) voneinander mit einer Periode beanstandet sind, welche zwischen ungefähr 170 nm und 1040 nm liegt.

5. Spektralfilter (150.1-150.4) nach einem der vorhergehenden Ansprüche, wobei eine zweite Seite von dem zweiten Bereich eine Abmessung aufweist, die zwischen ungefähr 150 nm und 1000 nm liegt.

6. Spektralfilter (150.1-150.4) nach Anspruch 5, wobei die ersten Seiten von dem ersten und dem zweiten Bereich Abmessungen haben, die im Wesentlichen ähnlich sind, oder die zweiten Seiten von dem ersten und dem zweiten Bereich Abmessungen haben, die im Wesentlichen ähnlich sind.

7. Spektralfilter (150.1-150.4) nach einem der vorhergehenden Ansprüche, wobei das Loch oder die Löcher (250.1-250.4) wenigstens teilweise mit einem dielektrischen Material gefüllt sind, welches wenigstens teilweise transparent ist.

8. Spektralfilter-Matrix, umfassend wenigstens eine Mehrzahl von Spektralfiltern (150.1-150.4) nach einem der Ansprüche 1 bis 7, wobei wenigstens zwei der Spektralfilter (150.1-150.4) dazu geeignet sind, eine Filterung nach unterschiedlichen Wellenlängen oder Wellenlänge-Bereichen durchzuführen, wobei die Abmessungen von den ersten Seiten der Bereiche von wenigstens einem Loch (250.1-250.4) von einem ersten der zwei Filter (150.1-150.4) im Wesentlichen ähnlich wie oder verschieden von den Abmessungen der ersten Seiten der Bereiche von wenigstens einem Loch (250.1-250.4) von einem zweiten der zwei Filter (150.1-150.4) sind, wobei die Abmessungen der zweiten Seiten der Bereiche des Lochs (250.1-250.4) von dem ersten der zwei Filter (150.1-150.4) von den Abmessungen der zweiten Seiten der Bereiche des Lochs (250.1 bis 250.4) von dem zweiten der zwei Filter (150.1-150.4) verschieden sind.

9. Spektralfilter-Matrix nach Anspruch 8, umfassend wenigstens vier Spektralfilter (150.1-150.4), welches einen Bayer-Filter bilden.

10. Bildsensor (1050), umfassend wenigstens eine Spektralfilter-Matrix (150.1-150.4) nach einem der Ansprüche 8 oder 9, und eine Fotodetektor-Matrix (102), wobei jeder Fotodetektor (102) gegenüber von einem der Spektralfilter (150.1-150.4) angeordnet ist.

11. Bildsensor (1050) nach Anspruch 10, wobei die Fotodetektor-Matrix (102) auf einem Substrat (104) angeordnet ist, welches Schaltkreise zum Auslesen und zur numerischen Verarbeitung umfasst oder/und eine Dicke aufweist, die ungefähr zwischen 100 nm und 500 µm liegt.

12. Bildsensor (1050) nach einem der Ansprüche 10 oder 11, weiterhin umfassend eine auf wenigstens einem dielektrischen Material, basierende Schicht (106), welche zwischen der Spektralfilter-Matrix (150.1-150.4) und der Fotodetektor-Matrix (102) angeordnet ist, oder zwischen der Fotodetektor-Matrix (102) und einem zweiten Substrat (110).

13. Bildsensor (1050) nach Anspruch 12, wobei die auf dem dielektrischen Material basierende Schicht (106) eine Mehrzahl von elektrischen Kontakten umfasst, die mit den Fotodetektoren (102) oder/und mit den Auslese-Schaltkreisen des Substrats (104) verbunden sind, oder/und auf Siliziumnitrid oder/und Siliziumoxid oder/und porösem Silizium basiert.

14. Bildsensor (1050) nach einem der Ansprüche 10 bis 13, weiterhin umfassend eine Schutzschicht (108) auf Basis von wenigstens einem dielektrischen Material, welche auf der Filtermatrix angeordnet ist, oder wobei die Filter-Matrix zwischen zwei Schichten auf Basis von wenigstens einem dielektrischen Material angeordnet ist, mit einer Dicke zwischen ungefähr 10 nm und 500 nm, und mit einem Brechungsindex n < 1,6.

15. Verfahren zur Verstellung von einem Spektralfilter (150.1-150.4) nach einem der Ansprüche 1 bis 7, umfassend wenigstens die folgenden Schritte:
- Strukturieren von einer dielektrischen Schicht, welche wenigstens einem dielektrischen Abschnitt bildet, der durch Leerbereiche umgeben ist, welche zwei gegenüberliegende Haupt-Seiten der dielektrischen Schicht durchqueren, wobei der dielektrische Abschnitt in einer zu einer Ebene von einer der zwei Haupt-Seiten parallelen Ebene wenigstens einen ersten rechteckigen Bereich umfasst, von dem eine ersten Seite eine Abmessung zwischen ungefähr 40 nm und 100 nm aufweist, und von dem eine zweiten Seite, senkrecht zur ersten Seite, eine Abmessung aufweist, die zwischen ungefähr 150 nm und 1000 nm liegt, und einen zweiten rechteckigen Bereich umfasst, der in Bezug auf den ersten rechteckigen Bereich zentriert ist, wobei eine erste Seite von dem zweiten Bereich parallel zu der zweiten Seite von dem ersten Bereich ist und eine Abmessung aufweist, die zwischen ungefähr 40 nm und 100 nm liegt,
- Aufbringen einer metallischen Schicht (101) wenigstens in den Leerbereichen, die in der dielektrischen Schicht um den dielektrischen Abschnitt herum gebildet sind,
- Planarisieren der metallischen Schicht (101),
- Beseitigen des dielektrischen Abschnitts.

16. Verfahren zur Herstellung von einem Spektralfilter (150.1-150.4) nach einem der Ansprüche 1 bis 7, umfassend wenigstens einen Schritt des Ätzens einer metallischen Schicht (101) gemäß einem Muster, welches wenigstens ein Loch (250.1-250.4) umfasst, welches zwei gegenüberliegende Haupt-Seiten der metallischen Schicht (101) durchquert und, in einer zu einer Ebene von einer der zwei Haupt-Seiten parallelen Ebene, einen ersten rechteckigen Bereich umfasst, von dem eine erste Seite eine Abmessung aufweist, die zwischen ungefähr 40 nm und 100 nm liegt, und von dem eine zweiten Seite, senkrecht zu der ersten Seite, eine Abmessung aufweist, welche zwischen ungefähr 150 nm und 1000 nm liegt, und einen zweiten rechteckigen Bereich umfasst, der in Bezug auf den ersten rechteckigen Bereich zentriert ist, wobei eine erste Seite von dem zweiten Bereich parallel zu der zweiten Seite von dem ersten Bereich ist und eine Abmessung aufweist, die zwischen ungefähr 40 nm und 100 nm liegt.

17. Verfahren nach einem der Ansprüche 15 oder 16, wobei eine zweite Seite von dem zweiten Bereich eine Abmessung aufweist, die zwischen ungefähr 150 nm und 1000 nm liegt.

## Claims

1. Spectral filter (150.1-150.4) comprising at least one metallic layer (101) structured by at least one hole (250.1-250.4) passing through two opposite main faces of the metallic layer (101) and comprising, in a plane parallel to a plane of one of the two main faces, a first rectangular section whereof a first side has a dimension between around 40 nm and 100 nm, and whereof a second side, perpendicular to the first side, has a dimension between around 150 nm and 1000 nm, and a second rectangular section centred relative to the first rectangular section, a first side of the second section being parallel to the second side of the first section and having a dimension between around 40 nm and 100 nm, and wherein the dimensions of the first side of the second section are different from the dimensions of the first side of the first section and/or the dimensions of the second side of the second section are different from the dimensions of the second side of the first section in order to obtain a filter which is sensitive to polarization.

2. Spectral filter (150.1-150.4) according to claim 1, in which the structured metallic layer (101) is based on aluminium and/or silver and/or gold, and/or has a thickness of between around 30 nm and 500 nm.

3. Spectral filter (150.1-150.4) according to one of preceding claims, in which, when the filter (150.1-150.4) comprises a plurality of holes (250.1-250.4) passing through the metallic layer (101), said holes (250.1-250.4) are regularly spaced from one another.

4. Spectral filter (150.1-150.4) according to claim 3, in which the holes (250.1-250.4) are spaced one from another according to a period of between around 170 nm and 1040 nm.

5. Spectral filter (150.1-150.4) according to one of preceding claims, in which a second side of the second section has a dimension between around 150 nm and 1000 nm.

6. Spectral filter (150.1-150.4) according to claim 5, in which the first sides of the first and of the second sections have substantially similar dimensions or the second sides of the first and of the second sections have substantially similar dimensions.

7. Spectral filter (150.1-150.4) according to one of preceding claims, in which the hole or holes (250.1-250.4) are filled at least in part by at least partially transparent dielectric material.

8. Matrix of spectral filters comprising at least one plurality of spectral filters (150.1-150.4) according to one of claims 1 to 7, at least two of the spectral filters (150.1-150.4) being capable of carrying out filtering according to different wavelengths, or ranges of wavelengths, the dimensions of the first sides of the sections of at least one hole (250.1-250.4) of a first of the two filters (150.1-150.4) being substantially similar or different to the dimensions of the first sides of the sections of at least one hole (250.1-250.4) of a second of the two filters (150.1-150.4), the dimensions of the second sides of the sections of the hole (250.1-250.4) of the first of the two filters (150.1-150.4) being different to the dimensions of the second sides of the sections of the hole (250.1-250.4) of the second of the two filters (150.1-150.4).

9. Matrix of spectral filters according to claim 8, comprising at least four spectral filters (150.1-150.4) forming a Bayer filter.

10. Image sensor (1050) comprising at least one matrix of spectral filters (150.1-150.4) according to one of claims 8 or 9, and a matrix of photodetectors (102), each photodetector (102) being placed opposite one of the spectral filters (150.1-150.4).

11. Image sensor (1050) according to claim 10, in which the matrix of photodetectors (102) is placed against a substrate (104) comprising reading and digital processing circuits and/or having a thickness between around 100 nm and 500 µm.

12. Image sensor (1050) according to one of claims 10 or 11, also comprising a layer (106) based on at least one dielectric material placed between the matrix of spectral filters (150.1-150.4) and the matrix of photodetectors (102), or between the matrix of photodetectors (102) and a second substrate (110).

13. Image sensor (1050) according to claim 12, in which the layer (106) based on the dielectric material comprises a plurality of electric contacts connected to the photodetectors (102) and/or to the reading circuits of the substrate (104) and/or is based on silicon nitride and/or silicon oxide and/or porous silicon.

14. Image sensor (1050) according to one of claims 10 to 13, also comprising a protective layer (108) based on at least one dielectric material placed against the matrix of filters, or in which the matrix of filters is placed between two layers based on at least one dielectric material, of a thickness between around 10 nm and 500 nm, and optical index n < 1.6.

15. Method for producing a spectral filter (150.1-150.4) according to one of claims 1 to 7, comprising at least the following steps:
- structuring a dielectric layer, forming at least one dielectric portion enclosed by empty zones passing through two opposite main faces of the dielectric layer, the dielectric portion comprising, in a plane parallel to a plane of one of the two main faces, at least one first rectangular section whereof a first side has a dimension between around 40 nm and 100 nm, and whereof a second side, perpendicular to the first side, has a dimension between around 150 nm and 1000 nm, and a second rectangular section centred relative to the first rectangular section, a first side of the second section being parallel to the second side of the first section and having a dimension between around 40 nm and 100 nm,
- depositing of a metallic layer (101) at least in the empty zones formed in the dielectric layer around the dielectric portion,
- planarization of the metallic layer (101),
- deletion of the dielectric portion.

16. Method for producing a spectral filter (150.1-150.4) according to one of claims 1 to 7, comprising at least one etching step of a metallic layer (101) according to a pattern comprising at least one hole (250.1-250.4) passing through two opposite main faces of the metallic layer (101) and comprising, in a plane parallel to a plane of one of the two main faces, a first rectangular section whereof a first side has a dimension between around 40 nm and 100 nm, and whereof a second side, perpendicular to the first side, has a dimension between around 150 nm and 1000 nm, and a second rectangular section centred relative to the first rectangular section, a first side of the second section being parallel to the second side of the first section and having a dimension between around 40 nm and 100 nm.

17. Method according to one of claims 15 or 16, in which a second side of the second section has a dimension between around 150 nm and 1000 nm.
